# DEMANDE DE BREVET EUROPEEN

(11) **EP 4 191 714 A1**
(43) Date de publication de la demande: **07.06.2023**
(21) Numéro de dépôt: 22198208.5
(22) Date de dépôt: 27.09.2022
(51) Int. Cl.: H01M 8/0202, H01M 8/0213, H01M 8/0228

(54) **GUIDE D'ÉCOULEMENT POUR RÉACTEUR ÉLECTROCHIMIQUE ET PROCÉDÉ DE FABRICATION ASSOCIÉ**

(30) Priorité: 28.09.2021 FR 2110229
(71) Demandeur: Commissariat à l'énergie atomique et aux énergies alternatives, 75015 Paris (FR)
(72) Inventeur: TREMBLAY, Denis, 38054 GRENOBLE Cedex 09 (FR); BLACHOT, Jean-François, 38054 GRENOBLE Cedex 09 (FR); POIROT-CROUVEZIER, Jean-Philippe, 38059 GRENOBLE Cedex 09 (FR); VINCENT, Rémi, 38054 GRENOBLE Cedex 09 (FR)
(74) Mandataire: Hautier IP

(57) **Abrégé**

L'invention repose sur une utilisation novatrice de la technique d'impression par sérigraphie pour réaliser des circuits fluidiques. Elle concerne un guide d'écoulement 1 pour réacteur électrochimique comprenant au moins un canal d'écoulement 2 délimité par au moins une nervure 3 supportée par une première face 101 d'un substrat 10, chaque nervure 3 comprenant au moins une couche 31 à base de, voire constituée de, deux matériaux différents entre eux :
• un premier matériau 311 de renfort mécanique, et
• un deuxième matériau 312 conducteur d'électricité,
les premier et deuxième matériaux 311, 312 se conformant l'un avec l'autre pour former ladite au moins une couche 31.

Par utilisation de deux masques d'impression différents, il est possible de fabriquer un tel guide d'écoulement offrant un compromis optimisé entre conductivité électrique et résistance mécanique, de façon simple et peu onéreuse.

## Description

### DOMAINE TECHNIQUE

La présente invention concerne l'optimisation d'au moins un composant d'un réacteur électrochimique, tel qu'une pile à combustible, et de son procédé de fabrication. Elle concerne plus particulièrement un guide d'écoulement et son procédé de fabrication dans le cadre de cellules électrochimiques destinées à une utilisation en pile à combustible, et en particulier à une utilisation en pile à combustible de température inférieure à 250°C.

### ETAT DE LA TECHNIQUE

Les piles à combustible sont par exemple envisagées comme système d'alimentation électrique pour des véhicules automobiles destinés à être produits à grande échelle dans le futur, ainsi que pour un grand nombre d'autres applications. Une pile à combustible est un dispositif électrochimique qui convertit de l'énergie chimique directement en énergie électrique. Un combustible, tel que du dihydrogène ou du méthanol, est utilisé comme carburant de la pile à combustible.

Les piles à combustible à membrane échangeuse de protons, dites PEM, fonctionnent à basse température, typiquement inférieure à 250°C, et présentent des propriétés de compacité particulièrement intéressantes.

### Principe de la pile à combustible

La pile à combustible est un générateur électrochimique qui permet de convertir de l'énergie chimique en énergie électrique par une réaction d'oxydo-réduction.

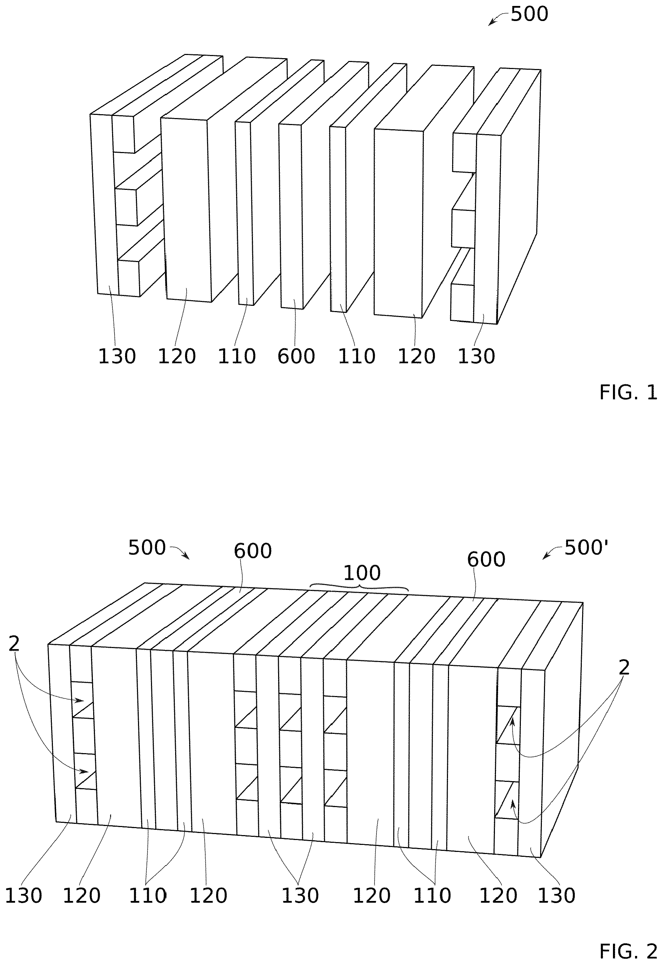

En référence à la figure 1 annexée, le coeur électrochimique 500 de la pile est constitué de deux électrodes 110 séparées par une membrane échangeuse d'ions 600. Les électrodes 110 sont alimentées d'un réactif approprié, respectivement un combustible pour l'anode et un comburant pour la cathode, créant ainsi une réaction électrochimique à la surface des électrodes 110 qui va permettre de générer le courant électrique.

En référence à la figure 2, la pile à combustible peut être constituée d'un empilement de cœurs électrochimiques 500, 500' montés en série appelé « stack ». Entre chaque empilement de cœurs électrochimiques 500, 500' peut être constituée une plaque bipolaire 100 pour permettre d'alimenter les électrodes 110 en réactifs. La pile à combustible peut donc être constituée d'un empilement de cellules unitaires séparées deux à deux par une plaque bipolaire 100.

Plus particulièrement, une pile à combustible à membrane échangeuse de protons ou PEMFC (de l'acronyme anglo-saxon « Proton Exchange Membrane Fuel Cell ») comprend au moins une cellule unitaire contenant un assemblage membrane-électrodes ou AME (110/6/110), constitué d'une membrane électrolytique 600 permettant le passage sélectif des protons et, de part et d'autre de cette membrane 600, les électrodes 110.

La membrane 600 est généralement constituée d'un ionomère perfluorosulfoné tel que le Nafion^{®}. Les électrodes 110, également appelées couches catalytiques ou actives, contiennent un catalyseur, avantageusement du platine (Pt), supporté par du carbone, et éventuellement un ionomère, en général le même que celui constituant la membrane 600.

Au niveau de l'anode, du dihydrogène (H2), utilisé comme carburant, est oxydé pour produire des protons traversant la membrane 600. Les électrons produits par cette réaction migrent vers le circuit fluidique, puis traversent un circuit électrique externe à la cellule 500 pour former un courant électrique. Au niveau de la cathode, de l'oxygène (O2) est réduit et réagit avec les protons ayant traversé la membrane 600 pour former de l'eau.

Des couches de diffusion gazeuse 120 ou GDL (de l'acronyme anglo-saxon « Gaz Diffusion Layer»), classiquement en fibres de graphite, peuvent être interposées entre les électrodes 110 et les plaques bipolaires 100.

### Principe d'une plaque bipolaire

La plaque bipolaire 100 assure plusieurs fonctions, parmi lesquelles notamment :
- la distribution des réactifs et l'évacuation des sous-produits formés, possiblement via des canaux 2 et/ou orifices ménagés en son sein;
- le transfert des électrons générés au niveau des anodes des différentes cellules unitaires 500, ce qui implique que chaque plaque bipolaire 100 soit électriquement conductrice ;
- le refroidissement des cellules unitaires 500, possiblement via la circulation d'un liquide de refroidissement en son sein ;
- un support mécanique pour le coeur électrochimique 500.

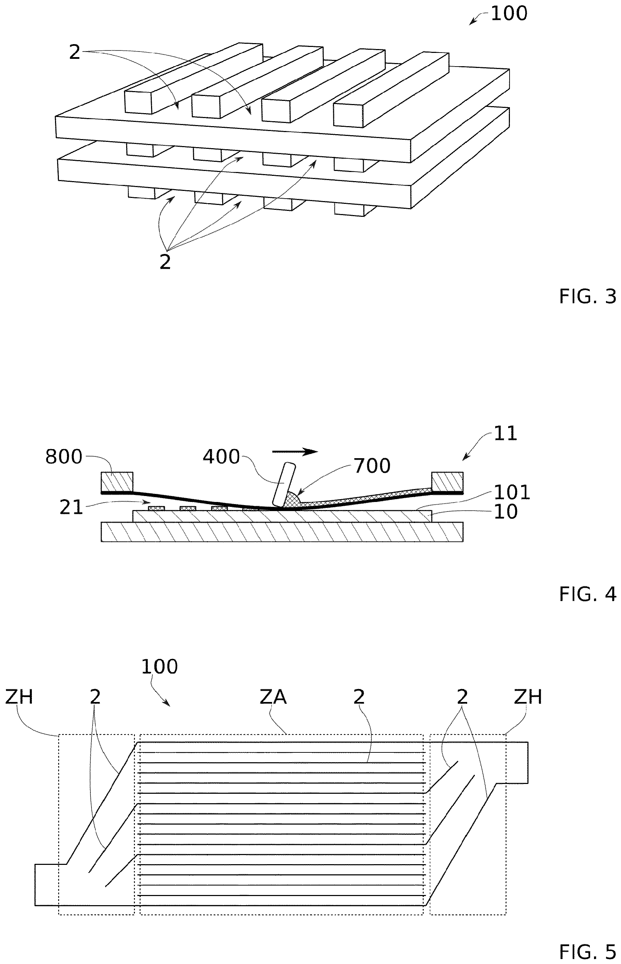

On peut considérer le cas typique d'une plaque bipolaire 100 telle qu'illustrée sur la figure 3 comprenant trois circuits fluidiques, dédiés respectivement au guidage des écoulements de fluide anodique, de fluide cathodique et de fluide de refroidissement (au centre de la plaque). Le guidage des écoulements est réalisé via la mise en place de nervures qui influent sur l'écoulement du fluide. Ces nervures peuvent prendre la forme, par exemple, d'un faisceau de canaux 2 parallèles, que l'on nomme ici « circuit fluidique ». Ces nervures réalisant la connexion électrique et thermique avec le coeur de pile, elles doivent être électriquement conductrices.

Chaque circuit fluidique d'une pile à combustible est généralement constitué d'un matériau conducteur de courant qui peut être du graphite, un plastique à renfort de fibres de carbone, ou bien un métal, tel que l'acier inoxydable, un alliage métallique ou tout autre matériau conducteur de courant. Les fluides cathodique et anodique sont distribués sur toute la surface active de chaque électrode par les canaux 2 des circuits fluidiques, chaque circuit fluidique comprenant une entrée pour permettre l'amenée du fluide et une sortie pour permettre l'évacuation du fluide non réactif et des sous-produits des réactions électrochimiques.

Les canaux 2 du circuit fluidique sont encore à ce jour principalement réalisés par usinage ou formage à partir d'une plaque électriquement conductrice 130. Dans le premier cas, la matière est enlevée et, dans le second cas, les canaux 2 sont créés par déformation de la plaque électriquement conductrice 130. Les canaux 2 de la plaque sont conçus pour contrôler la perte de charge des écoulements qui y circulent.

Plus particulièrement, chaque circuit fluidique utilisé dans la pile à combustible à membrane échangeuse de protons est principalement réalisé à partir de métal embouti pour des raisons de coûts, d'encombrement et de performances. Généralement, l'épaisseur de la plaque électriquement conductrice 130 est comprise entre 1 et 4 mm et les canaux 2 ont de préférence une largeur comprise entre 0,2 et 2 mm, une profondeur comprise entre 0,2 et 0,5 mm, et un espacement (ou largeur de dent) compris entre 0,2 et 2 mm. La surface de diffusion des fluides est variable en fonction de la dimension de la pile et de la puissance souhaitée. Pour les applications de forte puissance, un circuit de refroidissement des fluides est généralement inséré entre les canaux de diffusion de l'hydrogène à l'anode et les canaux de diffusion de l'oxygène (ou de l'air) à la cathode. L'empilement de circuits fluidiques sur deux niveaux, voire sur trois niveaux (comme représenté sur la figure 3), forme une plaque bipolaire 100.

Néanmoins, le circuit fluidique obtenu par emboutissage de tôle métallique présente certains inconvénients, parmi lesquels notamment :
- un procédé de réalisation compliqué et un coût de production qui reste encore élevé, en particulier pour de faibles volumes de production ;
- le bombé de la plaque 130 occasionnée par le formage qui rend compliqué le dépôt des joints pour garantir l'étanchéité de la cellule 500 ;
- la difficulté pour diminuer encore l'épaisseur de la plaque 130 et son poids, déjà très optimisés, qui impactent fortement la densité d'énergie volumique et massique de la pile à combustible ; et
- la difficulté pour diminuer la largeur des canaux 2 afin d'améliorer les performances de la pile, du fait des limites de formage des tôles utilisées.

Afin de simplifier le procédé de fabrication et diminuer le coût des plaques bipolaires, qui représente approximativement 40% du coût total de la pile à combustible, les solutions mises en oeuvre dans l'art antérieur ont notamment consisté à réaliser les nervures par impression sur un substrat plan métallique ou composite pour former un guide d'écoulement, puis la plaque bipolaire à partir d'au moins deux guides d'écoulement. Ce procédé permet, en variante, de réaliser le circuit fluidique sur la couche de diffusion gazeuse 120, en dehors de la plaque bipolaire 100.

D'autres agencements des circuits fluidiques, non détaillés ici, sont possibles. Par exemple, une plaque bipolaire 100 peut comprendre seulement deux circuits fluidiques, dédiés respectivement à chacun des deux réactifs. Par ailleurs, une plaque bipolaire 100 comprenant deux ou trois circuits fluidiques peut être constituée de plusieurs sous-ensembles disjoints, comprenant chacun au moins un circuit fluidique. Une plaque bipolaire 100 présentant les fonctions décrites précédemment est alors formée au moment de l'assemblage de la pile, lorsque les cellules sont empilées et qu'un effort de compression leur est appliqué.

### Réalisation de circuits fluidiques imprimés

En référence à la figure 4, l'impression de circuits fluidiques conducteurs se fait grâce à l'utilisation d'un masque de sérigraphie 11 contenant l'image du circuit fluidique à imprimer. A l'aide d'une racle 400, on fait passer une encre conductrice 700 à thixotropie très élevée à travers ce masque 11 et l'impression permet de déposer des motifs 21 de nervures, appelées aussi dents, sur la face 101 d'un substrat 10, de sorte à obtenir un circuit fluidique conducteur.

Plus particulièrement, la sérigraphie par écran maillé (désigné par mesh en langue anglaise) est basée sur l'utilisation d'un masque ou écran 11 constitué de deux composants principaux : un maillage (« mesh ») et une émulsion. Le maillage, tendu à l'intérieur d'un cadre 800, est le support mécanique de l'écran 11. La porosité du maillage est définie pour qu'il puisse être facilement traversé par l'encre. L'émulsion est un dépôt réalisé sur le maillage, et imprégnant le maillage à l'endroit de son dépôt, de manière à former une couche étanche à l'encre 700. Les vides présents dans cette couche d'émulsion sont destinés à être remplis par l'encre 700 au moment de la sérigraphie. L'épaisseur de la couche d'émulsion détermine en grande partie l'épaisseur de la couche d'encre déposée.

### Différentes zones d'une plaque bipolaire

En référence à la figure 5, une plaque bipolaire 100 peut comprendre deux zones différentes entre elles :
- une zone active (ZA), par exemple en contact avec la couche de diffusion gazeuse 120 ou GDL, et
- une zone d'homogénéisation (ZH), typiquement disposée en appui sur un renfort de l'assemblage membrane-électrodes ou AME.

Chacune de ces deux zones comprend des nervures (ou dents) réalisation un guide d'écoulement.

Sur chacune de ces deux zones ZA et ZH, l'effort de compression appliqué aux cellules empilées lors de l'assemblage de la pile à combustible peut avoir des conséquences différentes, et les deux propriétés critiques à contrôler des circuits fluidiques imprimés comprennent en premier lieu : leur résistance mécanique et leur conductivité électrique.

### Résistance mécanique des circuits fluidiques imprimés

Lors de l'assemblage et/ou du fonctionnement de la pile à combustible, la plaque bipolaire 100 est soumise à différentes contraintes mécaniques qui agissent potentiellement différemment en fonction de la zone fonctionnelle ZA ou ZH considérée.
- En zone active (ZA), la couche de diffusion gazeuse 120 ou GDL vient appuyer sur les dents, et
- En zone d'homogénéisation (ZH), les différents circuits fluidiques se superposent entre eux approximativement sur une même zone, mais des zones de joints de chaque circuit viennent ponctuellement fortement contraindre certaines parties des zones d'homogénéisation ZH des autres circuits, créant des surcontraintes potentiellement encore renforcées par la présence de fortes dilatations.

La résistance mécanique du dépôt ou des dépôts imprimés est primordiale pour le bon fonctionnement de la pile à combustible. En effet, si les dents imprimées viennent à s'effondrer quand elles sont soumises à de fortes contraintes, le passage des fluides dans les canaux 2 est obstrué et les pertes de charges augmentent fortement.

### Conductivité électrique des circuits fluidiques imprimés

Comme déjà mentionné plus haut, la plaque bipolaire 100 doit être conductrice d'électricité ; en particulier, relativement à la réalisation de circuits fluidiques imprimés sur un substrat conducteur d'électricité, la difficulté à surmonter comprend la réalisation de nervures (ou de dents) elles-mêmes conductrices d'électricité.

Plus particulièrement, les nervures (ou dents) imprimées doivent assurer le passage de très haute densité de courant ; par conséquent, elles doivent être très conductrices. De manière générale, la résistivité électrique d'une plaque bipolaire ne doit pas dépasser 20 Ω.cm².

La conductivité électrique est primordiale en zone active (ZA) ; elle l'est également en zone d'homogénéisation (ZH) si et seulement si cette zone est définie comme faisant partie de la zone active.

Dans la pratique, il est très difficile de réaliser, par sérigraphie, un ou des dépôts qui répondent de façon satisfaisante à chacun des deux critères que sont la conductivité électrique et la résistivité mécanique.

En effet, pour améliorer la conductivité électrique du ou des dépôts, la quantité de liant (non-conducteur d'électricité) dans l'encre à imprimer est diminuée, ce qui a pour effet de diminuer la résistance mécanique du circuit fluidique imprimé.

A l'inverse, pour améliorer la résistance mécanique, on peut utiliser des résines thermoplastiques ou thermodurcissables comme liant. Cependant, cela a pour effet de diminuer drastiquement la conductivité électrique du circuit fluidique imprimé.

Un objet de la présente invention est de proposer un guide d'écoulement pour réacteur électrochimique et/ou une plaque bipolaire pour réacteur électrochimique comprenant au moins deux guides d'écoulement, qui permette(nt) de pallier au moins un inconvénient de l'état de la technique.

Plus particulièrement, un objet de la présente invention est de proposer un guide d'écoulement pour réacteur électrochimique et/ou une plaque bipolaire pour réacteur électrochimique comprenant au moins deux guides d'écoulement, qui offre(nt) un compromis optimisé entre conductivité électrique et résistance mécanique, voire qui offre une résistance mécanique suffisante, sans compromis sur la conductivité électrique.

Un autre objet de la présente invention est de proposer un procédé de fabrication de circuits fluidiques imprimés qui permette de fabriquer un guide d'écoulement pour réacteur électrochimique et/ou une plaque bipolaire pour réacteur électrochimique comprenant au moins deux guides d'écoulement, qui permette(nt) de pallier au moins un inconvénient de l'état de la technique.

Plus particulièrement, un objet de la présente invention est de proposer un procédé de fabrication de circuits fluidiques imprimés qui permette de fabriquer un guide d'écoulement pour réacteur électrochimique et/ou une plaque bipolaire pour réacteur électrochimique comprenant au moins deux guides d'écoulement offrant un compromis optimisé entre conductivité électrique et résistance mécanique des circuits fluidiques imprimés, voire offrant une résistance mécanique suffisante, sans compromis sur la conductivité électrique.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, un premier aspect de l'invention concerne un guide d'écoulement pour réacteur électrochimique pour réacteur électrochimique comprenant au moins un canal d'écoulement délimité par au moins une nervure supportée par une première face d'un substrat, essentiellement tel que ladite au moins une nervure, de préférence chaque nervure, comprend au moins une couche à base de, voire constituée de, deux matériaux différents entre eux :
- un premier matériau de renfort mécanique, et
- un deuxième matériau conducteur d'électricité,
les premier et deuxième matériaux se conformant l'un avec l'autre pour former ladite au moins une couche.

Ainsi, au moins une couche d'au moins une nervure du guide d'écoulement selon le premier aspect de l'invention est constituée à la fois du premier matériau de renfort mécanique et du deuxième matériau conducteur d'électricité. Ceci confère, à ladite au moins une couche, potentiellement à chaque couche, une constitution hétérogène dans un plan (x,y) d'extension principale de la nervure, ce plan étant perpendiculaire à l'axe z selon lequel l'épaisseur de la nervure est définie. Autrement dit, la constitution d'au moins une couche d'au moins une nervure du guide d'écoulement selon le premier aspect de l'invention varie entre le premier matériau de renfort mécanique et le deuxième matériau conducteur d'électricité selon au moins un axe du plan (x,y) d'extension principale de la nervure. Dès lors, le guide d'écoulement selon le premier aspect de l'invention se distingue des guides d'écoulement selon l'art antérieur dont chaque nervure est constituée d'une pluralité de couches superposées entre elles, chaque couche étant d'une constitution homogène dans un plan (x,y) d'extension principale de la nervure, ce plan étant perpendiculaire à l'axe z selon lequel l'épaisseur de la nervure est définie. Notamment lorsque les différentes couches d'une nervure sont déposées par impression, et plus particulièrement par sérigraphie, l'épaisseur de chaque couche est typiquement définie par les conditions d'impression de cette couche. Notons que la constitution d'au moins une couche d'une nervure du guide d'écoulement selon le premier aspect de l'invention peut ainsi varier le long de l'axe x et/ou le long de l'axe y du plan (x,y) d'extension principale de la nervure.

Le premier matériau peut présenter, sous une contrainte moyenne en compression de 1 MPa, une déformation au moins deux fois, de préférence au moins dix fois, inférieure, à la déformation du deuxième matériau sous une même contrainte.

En complément optionnel à la caractéristique qui précède, le deuxième matériau peut présenter une résistivité électrique au moins deux fois, de préférence au moins dix fois, inférieure à une résistivité électrique du premier matériau.

De préférence, le premier matériau présente, sous une contrainte moyenne en compression de 1 MPa, une déformation plastique sensiblement inférieure à 10%.

De préférence, le deuxième matériau présente une résistivité électrique sensiblement inférieure à 20 mΩ.cm², de préférence sensiblement inférieure à 10 mΩ.cm².

Un autre aspect de l'invention concerne une plaque bipolaire pour réacteur électrochimique, de préférence pour pile à combustible à membrane échangeuse de protons, comprenant :
- au moins deux guides d'écoulement dont au moins un guide d'écoulement tel qu'introduit ci-dessous, et
- au moins un substrat supportant au moins l'un desdits au moins deux guides d'écoulement.

Selon un exemple de l'aspect précédent de l'invention, la plaque bipolaire comprend :
- au moins trois guides d'écoulement dont au moins un guide d'écoulement tel qu'introduit ci-dessus et
- au moins deux substrats supportant chacun au moins un desdits au moins trois guides d'écoulement,
lesdits au moins deux substrats étant assemblés entre eux de sorte que l'assemblage présente un desdits au moins trois guides d'écoulement entre deux desdits au moins deux substrats et deux autres desdits au moins trois guides d'écoulement de part et d'autre desdits au moins deux substrats.

Un autre aspect de l'invention concerne un procédé de fabrication d'au moins un guide d'écoulement pour réacteur électrochimique, le guide d'écoulement étant délimité par au moins une nervure, le procédé comprenant les étapes suivantes :
a. Fournir un substrat,
b. Fournir un premier écran maillé comprenant des ouvertures configurées pour former un premier motif constituant une première partie d'une couche de ladite au moins une nervure, de préférence de chaque nervure, et
c. Fournir un deuxième écran maillé comprenant des ouvertures configurées pour former un deuxième motif constituant une deuxième, voire une seconde, partie de la couche de ladite au moins une nervure, de préférence de chaque nervure.

Puis, sur une première face du substrat :
d. Imprimer une première couche à base d'une première encre par sérigraphie à l'aide du premier écran maillé,
e. Former le premier motif par séchage de la première couche de la première encre, puis
f. Positionner le deuxième écran maillé de sorte que ses ouvertures se conforment avec le premier motif pour définir sensiblement un volume de ladite au moins une couche de ladite au moins une nervure, de préférence de chaque nervure,
g. Imprimer une deuxième couche à base d'une deuxième encre par sérigraphie à l'aide du deuxième écran maillé tel que précédemment positionné,
h. Former le deuxième motif par séchage de la deuxième couche de la deuxième encre.

L'une des première et deuxième encres est telle que, après séchage, elle forme un premier matériau de renfort mécanique présentant, sous une contrainte moyenne en compression de 1 MPa, une déformation au moins deux fois, de préférence au moins dix fois, inférieure, à la déformation du deuxième matériau sous une même contrainte.

En complément optionnel à la caractéristique qui précède, l'autre des première et deuxième encres est telle que, après séchage, elle forme un matériau conducteur d'électricité présentant une résistivité électrique au moins deux fois, de préférence au moins dix fois, inférieure à une résistivité électrique du premier matériau.

De préférence, la première encre est l'encre destinée à former, après séchage, le premier matériau de renfort mécanique.

L'invention selon ses différents aspects repose sur l'idée consistant à venir renforcer mécaniquement les nervures en juxtaposant un matériau de renfort mécanique au matériau électriquement conducteur ordinairement constitutif des nervures (ou dents) délimitant les canaux d'écoulement, tout en conservant une conduction électrique satisfaisante des nervures.

L'invention selon ses différents aspects offre ainsi un compromis optimisé entre conductivité électrique et résistance mécanique des nervures imprimées, voire une résistance mécanique suffisante des nervures imprimées, sans compromis sur leur conductivité électrique.

Grâce à l'utilisation de deux masques d'impression différents entre eux, il est possible de concevoir et réaliser très simplement et pour un coût supplémentaire très faible (un seul masque de sérigraphie supplémentaire) des circuits fluidiques offrant un compromis optimisé entre conductivité électrique et résistance mécanique des nervures imprimées, voire une résistance mécanique suffisante des nervures imprimées, sans compromis sur leur conductivité électrique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective éclatée d'une partie d'un réacteur électrochimique selon un mode de réalisation de l'art antérieur.
La figure 2 représente schématiquement une vue en perspective regroupée d'un empilement de deux parties d'un réacteur électrochimique selon son mode de réalisation illustré sur la figure 1.
La figure 3 représente une vue en perspective d'une partie au moins d'une plaque bipolaire destinée à être située entre deux cœurs électrochimiques d'un réacteur électrochimique selon son mode de réalisation illustré sur la figure 1.
La figure 4 est une représentation schématique en coupe de côté d'une étape d'impression par sérigraphie pour la formation d'un motif d'impression.
La figure 5 représente schématiquement une vue de dessus d'une plaque bipolaire en différenciant sa zone active et ses zones d'homogénéisation.
La figure 6A représente schématiquement une vue de dessus d'un premier écran maillé mis en œuvre au cours d'un premier mode de réalisation du procédé de fabrication d'un guide d'écoulement selon le premier aspect de l'invention.
La figure 6B représente schématiquement une vue de dessus d'un deuxième écran maillé mis en œuvre au cours du premier mode de réalisation du procédé de fabrication d'un guide d'écoulement selon le premier aspect de l'invention.
La figure 6C représente schématiquement une vue partielle en coupe, selon un plan comprenant l'axe A-A illustré sur la figure 6A, du premier écran maillé tel qu'illustré sur la figure 6A.
La figure 6D représente schématiquement une vue partielle en coupe, selon un plan comprenant l'axe B-B illustré sur la figure 6B, du deuxième écran maillé tel qu'illustré sur la figure 6B.
Les figures 6E et 6F représentent schématiquement des vues partielles en coupe illustrant différentes étapes du premier mode de réalisation du procédé de fabrication d'un guide d'écoulement selon le premier aspect de l'invention.
La figure 7 est une vue partielle de dessus d'un exemple de guide d'écoulement selon le premier aspect de l'invention obtenu par mise en œuvre du premier mode de réalisation du procédé de fabrication selon l'invention.
La figure 8 est une vue partielle en perspective d'une zone active de l'exemple de guide d'écoulement illustré sur la figure 7.
La figure 9A représente schématiquement une vue de dessus d'un premier écran maillé mis en œuvre au cours d'un deuxième mode de réalisation du procédé de fabrication d'un guide d'écoulement selon le premier aspect de l'invention.
La figure 9B représente schématiquement une vue de dessus d'un deuxième écran maillé mis en œuvre au cours du deuxième mode de réalisation du procédé de fabrication d'un guide d'écoulement selon le premier aspect de l'invention.
La figure 9C représente schématiquement une vue partielle en coupe, selon un plan comprenant l'axe A-A illustré sur la figure 9A, du premier écran maillé tel qu'illustré sur la figure 9A.
La figure 9D représente schématiquement une vue partielle en coupe, selon un plan comprenant l'axe B-B illustré sur la figure 9B, du deuxième écran maillé tel qu'illustré sur la figure 9B.
Les figures 9E à 9G représentent schématiquement des vues partielles en coupe illustrant différentes étapes du deuxième mode de réalisation du procédé de fabrication d'un guide d'écoulement selon le premier aspect de l'invention.
Les figures 10 à 12 illustrent chacune une vue en coupe schématique d'un exemple de configuration de deux guides d'écoulement selon un aspect de l'invention.
Les figures 13 et 14 illustrent chacune une vue en coupe schématique d'un exemple de configuration d'une plaque bipolaire selon un aspect de l'invention.
La figure 15 illustre une vue en coupe schématique d'un exemple de configuration d'un guide d'écoulement selon un mode de réalisation d'un aspect de l'invention.
La figure 16 illustre une association du guide d'écoulement de la figure 15 avec d'autres composants d'un réacteur électrochimique.
La figure 17 illustre une vue en coupe schématique d'un exemple de configuration d'un guide d'écoulement selon un mode de réalisation d'un aspect de l'invention.
La figure 18 illustre une association du guide d'écoulement de la figure 17 avec un autre composant d'un réacteur électrochimique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et les largeurs des différents éléments illustrés ne sont pas nécessairement représentatifs de la réalité ou de facteurs de forme réalistes.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple du premier aspect de l'invention, le deuxième matériau s'étend depuis la première face du substrat jusqu'à un sommet de ladite au moins une nervure, de préférence chaque nervure, en formant un chemin de conduction électrique continu. L'on s'assure ainsi d'une conduction électrique sur la hauteur des nervures définie par la conduction électrique élevée du deuxième matériau ;
Selon un autre exemple du premier aspect de l'invention, le premier matériau comprend, voire est constitué de, l'un au moins parmi une résine thermoplastique ou époxyde, tels que le poly(chlorure de vinyle) (ou PVC) ou le polyamide (ou PA), et une résine thermodurcissable, tel que le polyuréthane (ou PU). L'on s'assure ainsi que le premier matériau soit capable de résister aux conditions usuelles de fonctionnement d'une pile à combustible, à savoir en particulier une température d'environ 80°C et une hygrométrie très élevée ;
En alternative à l'exemple précédent, le premier matériau comprend au moins les mêmes éléments constitutifs du deuxième matériau avec une concentration en liant, tel que le poly(fluorure de vinylidène) (ou PVDF), au moins trois fois supérieure. L'on s'assure ainsi d'une résistance mécanique satisfaisante du premier matériau, relativement à la résistance mécanique du deuxième matériau.
Selon l'un ou l'autre des deux exemples précédents, le premier matériau peut comprendre en outre des charges conductrices d'électricité, telles que du graphite et/ou du noir de carbone. L'on confère ainsi une propriété de conduction électrique au matériau de renfort mécanique des nervures ;
Selon un premier mode de réalisation, ladite au moins une couche de ladite au moins une nervure, de préférence chaque nervure, comprend des plots du premier matériau, le deuxième matériau s'étendant au moins entre plots successifs, par portions, le long de la nervure. Le deuxième matériau peut s'étendre au moins entre les plots successifs le long de la nervure pour venir au contact desdits plots, de sorte à ce que ladite au moins une couche soit constituée d'une succession des plots du premier matériau et de portions du deuxième matériau complétant ladite au moins une couche. Selon cet exemple, la continuité électrique depuis la première face du substrat jusqu'au sommet de chaque rainure 3 est ainsi assurée, entre lesdits plots, par le deuxième matériau.
Selon un exemple du premier mode de réalisation, les plots sont répartis, sur la première face du substrat, de façon homogène.
Selon un autre exemple du premier mode de réalisation, les plots sont répartis, sur la première face du substrat, de sorte que chaque plot d'une nervure ne se situe pas à une même position longitudinale qu'un plot d'une nervure adjacente, les plots étant par exemple répartis en quinconce entre trois nervures adjacentes entre elles.
Selon un autre exemple du premier mode de réalisation, les plots s'étendent sur une surface totale inférieure à 10% de la surface totale de la première face du substrat, voire d'une portion de la surface de la première face du substrat qui correspond à une zone active (ZA) pour le réacteur électrochimique.
Selon un autre exemple du premier mode de réalisation, chaque plot présente :
   - Une largeur sensiblement égale à la largeur de ladite au moins une nervure, et/ou
   - Une longueur selon la direction principale d'extension de ladite au moins une nervure sensiblement comprise entre 500 µm et 5 mm, et/ou
   - Une épaisseur strictement inférieure, de préférence d'au plus 10%, à l'épaisseur que présente le deuxième matériau.
Selon un deuxième mode de réalisation, alternatif ou complémentaire du premier mode de réalisation, les premier et deuxième matériaux se conforment l'un avec l'autre pour former ladite au moins une couche en s'étendant l'un à côté de l'autre, sur au moins une portion de la longueur de ladite au moins une nervure, voire de chaque nervure.
Selon un exemple du deuxième mode de réalisation, ladite au moins une couche comprend, sur ladite au moins une portion de la longueur de ladite au moins une nervure, voire de chaque nervure, une partie centrale à base de l'un parmi le premier matériau et le deuxième matériau et des parties latérales à base de l'autre parmi le premier matériau et le deuxième matériau.
Selon l'exemple précédent, ladite au moins une couche comprend en outre une partie supérieure à base du deuxième matériau et s'étendant sur ladite partie centrale et les parties latérales, la partie centrale étant de préférence à base du premier matériau.
Selon un autre exemple du deuxième mode de réalisation, ladite au moins une portion de la longueur de ladite au moins une nervure, voire de chaque nervure, comprend une pluralité de couches superposées entre elles.
Selon un autre exemple du deuxième mode de réalisation, sur ladite au moins une portion de la longueur de ladite au moins une nervure, voire de chaque nervure :
   - la partie centrale à base du premier matériau s'étend sur une largeur comprise entre 5 et 50% d'une largeur totale des parties latérales (6) à base du deuxième matériau, ou
   - les parties latérales à base du premier matériau s'étendent sur une largeur totale comprise entre 5 et 50% de la largeur de la partie centrale à base du deuxième matériau.
Selon un autre exemple du premier aspect de l'invention, ladite au moins une couche, de préférence ladite au moins une nervure, voire chaque nervure, est à base du premier matériau sur une portion de la surface de la première face du substrat qui correspond à une zone d'homogénéisation (ZH) pour le réacteur électrochimique.
Selon un autre exemple du premier aspect de l'invention, le substrat comprend au moins l'un parmi une couche de diffusion gazeuse du réacteur électrochimique, une couche d'électrode du réacteur électrochimique et une plaque électriquement conductrice.
Selon un exemple du procédé de fabrication selon l'invention, chaque écran maillé comprenant un maillage et une émulsion :
   - l'émulsion présente une épaisseur sensiblement comprise entre 100 et 200 µm, de préférence sensiblement comprise entre 100 et 150 µm, et encore plus préférentiellement sensiblement égale à 150 µm, et/ou
   - le maillage présente une épaisseur sensiblement comprise entre 50 et 150 µm, de préférence sensiblement comprise entre 80 et 120 µm, et encore plus préférentiellement sensiblement égale à 100 µm ;
Selon un autre exemple du procédé de fabrication selon l'invention, l'impression de chaque couche d'encre, est réalisée en appliquant une contrainte de cisaillement sur cette couche, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹. Une encre présentant ces caractéristiques est dite à thixotropie très élevée ;
Selon un autre exemple du procédé de fabrication selon l'invention, le substrat fourni comprend au moins l'un parmi une couche de diffusion gazeuse du réacteur électrochimique, une couche d'électrode du réacteur électrochimique et une plaque électriquement conductrice ;
Selon un autre exemple du procédé de fabrication selon l'invention, le substrat fourni étant une plaque électriquement conductrice, les étapes a à h du procédé sont répétées sur la deuxième face du substrat pour y fabriquer un second guide d'écoulement.

De préférence, chaque face à imprimer du substrat fourni est exempte de relief.

On entend par un paramètre « sensiblement égal/supérieur/inférieur à » une valeur donnée que ce paramètre est égal/supérieur/inférieur à la valeur donnée, à plus ou moins 20%, voire 10%, près de cette valeur. On entend par un paramètre «sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

On entend par une couche à base d'un matériau A, une couche comprenant ce matériau A et éventuellement d'autres matériaux.

On entend par « liant » :
- Dans un matériau solide, une substance solide qui enrobe et lie entre eux les composants d'un matériau hétérogène de manière à lui conférer de la cohésion, et
- Dans un matériau fluide, une substance fluide, de préférence non-volatile, à laquelle d'autres composants, telles que des charges conductrices d'électricité et/ou un solvant, sont mélangés pour produire une encre conductrice.

Une variation de concentration en liant dans une encre conductrice induit une variation de la thixotropie de l'encre et/ou une variation de la résistance mécanique sous contrainte, notamment en compression, d'un motif imprimé à l'aide de cette encre.

L'invention repose sur une utilisation novatrice de la technique d'impression par sérigraphie, et notamment par sérigraphie mesh, pour réaliser des circuits fluidiques constituant des guides d'écoulement pour réacteur(s) électrochimique(s).

L'invention est décrite ci-dessous à travers deux modes de réalisation illustrés sur les figures annexées.

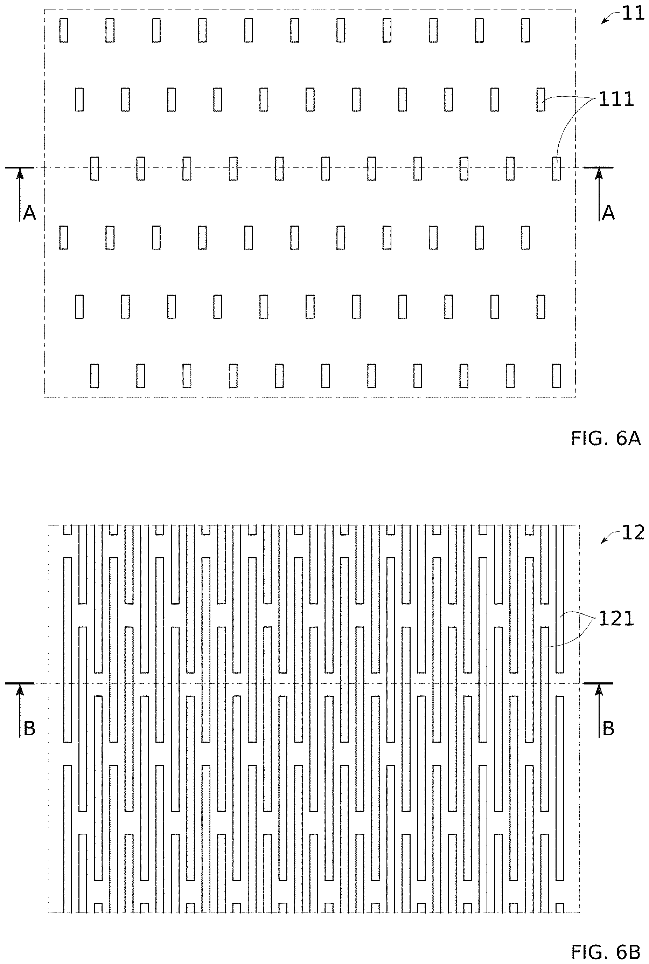

Le premier de ces deux modes de réalisation décrit ci-dessous est plus particulièrement illustré sur les figures 6A à 6F, 7 et 8.

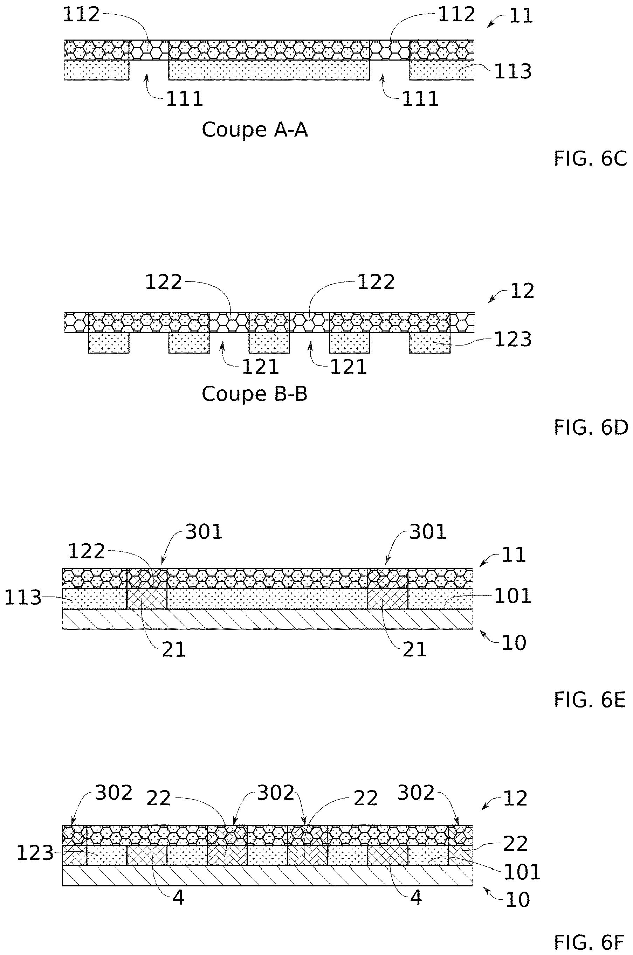

La figure 6A représente une vue partielle de dessus d'un premier écran maillé 11 comprenant des ouvertures 111 configurées pour former un premier motif 21 constituant une première partie d'une couche 31 d'une nervure 3 délimitant un canal d'écoulement 2 et destinée à être supportée par une première face 101 d'un substrat 10. La figure 6C illustre une vue en coupe partielle du premier écran maillé 11. La figure 6E illustre une première étape d'impression, sur la première face 101 du substrat 10, d'une première couche 301 à base d'une première encre par sérigraphie à l'aide du premier écran maillé 11 tel que représenté sur la figure 6C.

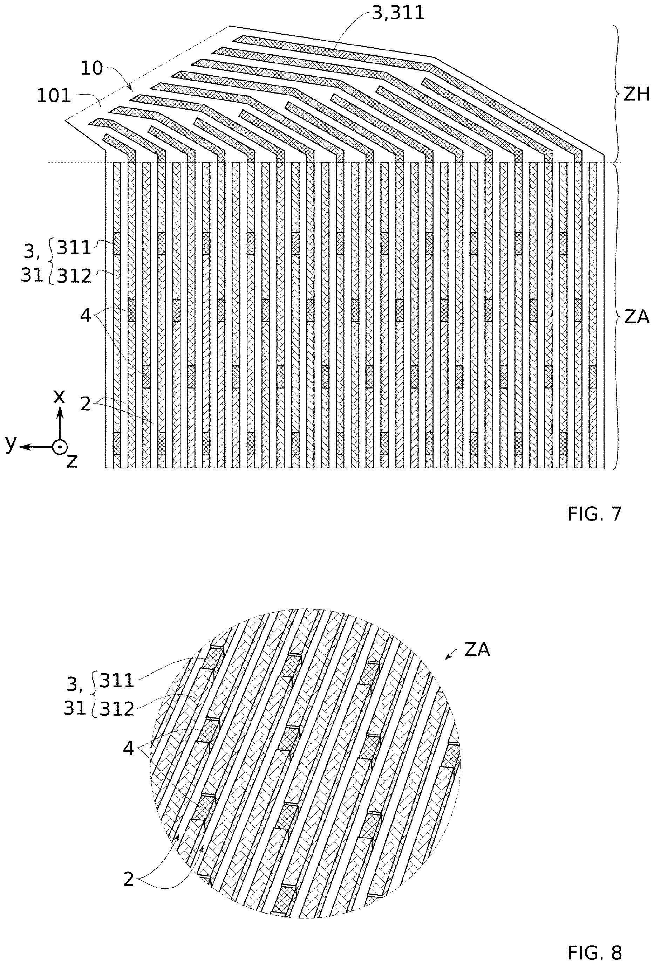

Le premier écran maillé 11 et la première encre sont tels qu'ils permettent d'imprimer des premiers motifs 21 destinés à former des plots 4 en un matériau de renfort mécanique, selon une distribution spatiale telle que représentée sur les figures 7 et 8.

La figure 6B représente une vue partielle de dessus d'un deuxième écran maillé 12 comprenant des ouvertures 121 configurées pour former un deuxième motif 22 constituant une seconde partie de la couche 31 de la nervure 3. La figure 6D illustre une vue en coupe partielle du deuxième écran maillé 12. La figure 6F illustre une deuxième étape d'impression, sur la première face 101 du substrat 10, d'une deuxième couche 302 à base d'une deuxième encre par sérigraphie à l'aide du deuxième écran maillé 12 tel que représenté sur la figure 6D.

Le deuxième écran maillé 12 et la deuxième encre sont tels qu'ils permettent d'imprimer des deuxièmes motifs 22 destinés à former, en se conformant avec les plots 4, chaque nervure 3 telle que représentée sur les figures 7 et 8. Plus particulièrement, chacune des nervures 3 illustrées sur les figures 7 et 8 comprend, voire est constituée de, une succession du premier matériau 311 de renfort mécanique et d'un deuxième matériau 312 issu du séchage de la deuxième encre, la deuxième encre étant une encre dite conductrice, de sorte que le deuxième matériau 312 soit un matériau conducteur d'électricité.

Comme l'illustre la figure 6F, le deuxième écran maillé 12 peut venir reposer, par son maillage 122, sur la surface supérieure des plots 4. Cette configuration est toutefois optionnelle, notamment dans la mesure où la deuxième encre est destinée à former des portions du deuxième matériau 312 qui est conducteur d'électricité. On notera en outre que, de sorte à éviter un dépôt de la deuxième encre sur les plots 4, la porosité du maillage 122 du deuxième écran maillé 12 est obstruée par de l'émulsion 123 sur des portions destinées à être situées en vis-à-vis des plots 4, lors de l'impression des deuxièmes motifs 22.

Comme illustré sur les figures 7 et 8, chaque nervure 3 est ainsi formée d'une couche 31 comprenant des plots 4 du premier matériau 311 de renfort mécanique et des portions du deuxième matériau 312 conducteur d'électricité s'étendant entre plots 4 successifs le long de la nervure 3. Chaque nervure 3 est plus particulièrement constituée d'une succession de plots 4 du premier matériau 311 et de portions du deuxième matériau 312 complétant la nervure 3. La continuité électrique depuis la première face 101 du substrat 10 jusqu'au sommet de chaque rainure 3 ou de chaque couche 31 est ainsi assurée, entre lesdits plots 4, par le deuxième matériau 312.

Comme illustré sur les figures 7 et 8, les plots 4 sont répartis, sur la première face 101 du substrat 10, de façon homogène. De préférence, et toujours comme illustré sur les figures 7 et 8, les plots 4 sont répartis, sur la première face 101 du substrat 10, de sorte que chaque plot 4 d'une nervure 3 donnée ne se situe pas à une même position longitudinale qu'un plot 4 d'une nervure 3 adjacente. Selon un exemple alternatif à celui illustré sur les figures 7 et 8, les plots peuvent être répartis en quinconce entre trois nervures adjacentes entre elles.

En observant attentivement la figure 8, on note que les plots 4 ne sont pas nécessairement d'une même hauteur que les portions du deuxième matériau 312 ; ils ne doivent pas être d'une épaisseur strictement supérieure à celle des portions du deuxième matériau 312. Plus particulièrement, les plots 4 peuvent être d'une hauteur sensiblement inférieure à la hauteur des portions du deuxième matériau 312. De préférence, l'épaisseur des plots 4 n'est pas inférieure de plus de 10% relativement à l'épaisseur des portions du deuxième matériau 312.

Les portions du deuxième matériau 312, présentant, sous une contrainte moyenne en compression de 1 MPa, une déformation au moins deux fois, de préférence au moins dix fois, supérieure, à la déformation du premier matériau 311 constituant les plots 4 sous une même contrainte, ces portions 312 vont pouvoir se déformer sous l'action d'une compression, et notamment d'une compression liée à l'assemblage des différents éléments d'un réacteur électrochimique, ou au fonctionnement d'un tel réacteur, jusqu'à ce que l'un des éléments assemblés entre eux viennent buter par des portions de sa surface sur les sommets des plots 4. L'étanchéité du canal d'écoulement 2 est ainsi assurée, entre les éléments assemblés, non seulement au niveau des portions du deuxième matériau 312, mais également au niveau des plots 4.

On notera également que l'épaisseur des premiers motifs 21, et donc des plots 4 et l'épaisseur des deuxièmes motifs 22, et donc des portions 312, sont aisément modulables par modulation entre elles de l'épaisseur d'émulsion 113 du premier écran maillé 11 et de l'épaisseur d'émulsion 123 du deuxième écran maillé 12.

On note encore en observant les figures 7 et 8 que chaque plot 4 tel qu'illustré est d'une longueur significativement inférieure à la longueur de chaque portion 312. Typiquement, la longueur de chaque plot 4 est sensiblement comprise entre 500 µm et 5 mm. Il est en effet nécessaire de veiller à ce que, en zone active ZA, suffisamment de courant, et donc de puissance électrique, puisse transiter depuis la surface 101 du substrat 10 jusqu'aux sommets des nervures 3. C'est pourquoi les plots 4, peu, voire pas, conducteurs d'électricité, ne s'étendent de préférence que sur une surface totale inférieure à 10% de la surface totale de la portion de la surface 101 du substrat 10 qui correspond à la zone active ZA pour le réacteur électrochimique. En outre, chaque plot 4 présente de préférence une largeur sensiblement égale à la largeur de la nervure 3 ; autrement dit, la nervure présente de préférence une largeur constante sur toute sa longueur.

En outre, considérant que le deuxième matériau 312 peut présenter une résistivité électrique au moins deux fois, de préférence au moins dix fois, inférieure à une résistivité électrique du premier matériau, il est même envisageable que le premier matériau 311 de renfort mécanique présente une résistivité électrique si élevée qu'aucun courant électrique n'y circule lors du fonctionnement du réacteur électrochimique dont le guide d'écoulement 1 est destiné à faire partie.

En observant la figure 7, on s'aperçoit que chaque nervure 3 n'est constituée d'une succession de plots 4 du premier matériau 311 de renfort mécanique et de portions du deuxième matériau 312 conducteur d'électricité, qu'au niveau d'une zone active ZA du réacteur électrochimique dont le guide d'écoulement 1 est destiné à faire partie. En effet, une autre zone, dite zone d'homogénéisation ZH, est également illustrée sur la figure 7 au niveau de laquelle le guide d'écoulement 1 est défini par des nervures 3 entièrement constituées à base du premier matériau 311 de renfort mécanique. Dans une telle zone d'homogénéisation ZH, il n'est en effet pas nécessaire que les nervures 3 soient conductrices d'électricité, mais il est en revanche souhaitable qu'elles soient mécaniquement résistantes, de sorte à ne pas de déformer de façon significative sous les contraintes subies lors de l'assemblage et/ou du fonctionnement du réacteur électrochimique dont la zone d'homogénéisation ZH est destinée à faire partie.

Considérant que les nervures illustrées sur la figure 7 s'étendent dans un plan (x,y) perpendiculaire à un axe z selon lequel est définie l'épaisseur des nervures, et considérant que chaque nervure s'étend principalement selon l'axe x de ce plan (x,y), on observera que la constitution de chaque nervure varie au moins le long de cet axe x. En parcourant chaque nervure selon l'axe x, on trouve effectivement une alternance dans la constitution de chaque nervure entre le premier matériau 311 de renfort mécanique et le deuxième matériau 312 conducteur d'électricité.

Notons ici qu'il est envisagé que les plots 4 et les nervures 3 situées en zone d'homogénéisation soient imprimées lors d'une même étape d'impression. Par ailleurs, notons que, s'il est préférable d'imprimer les plots 4 avant les portions 312, procéder à l'inverse n'est pas exclu.

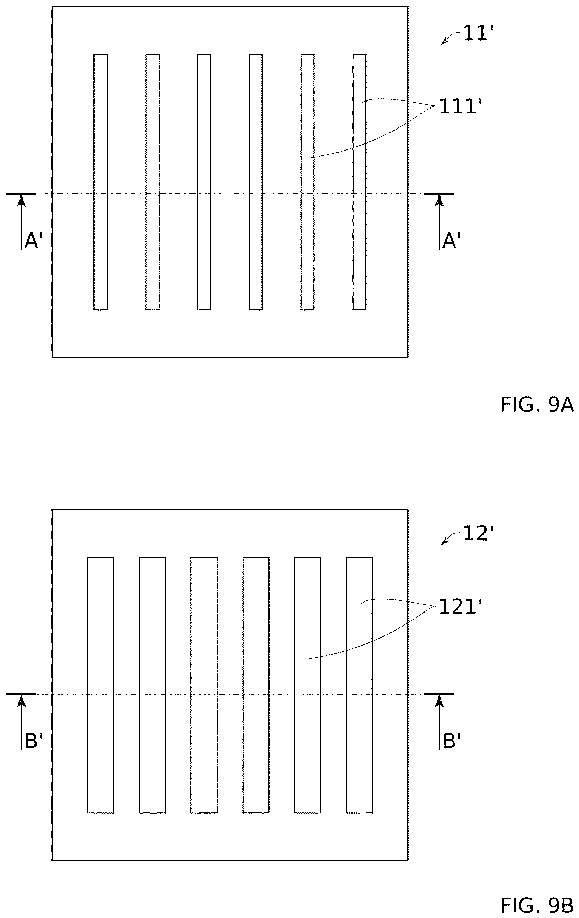

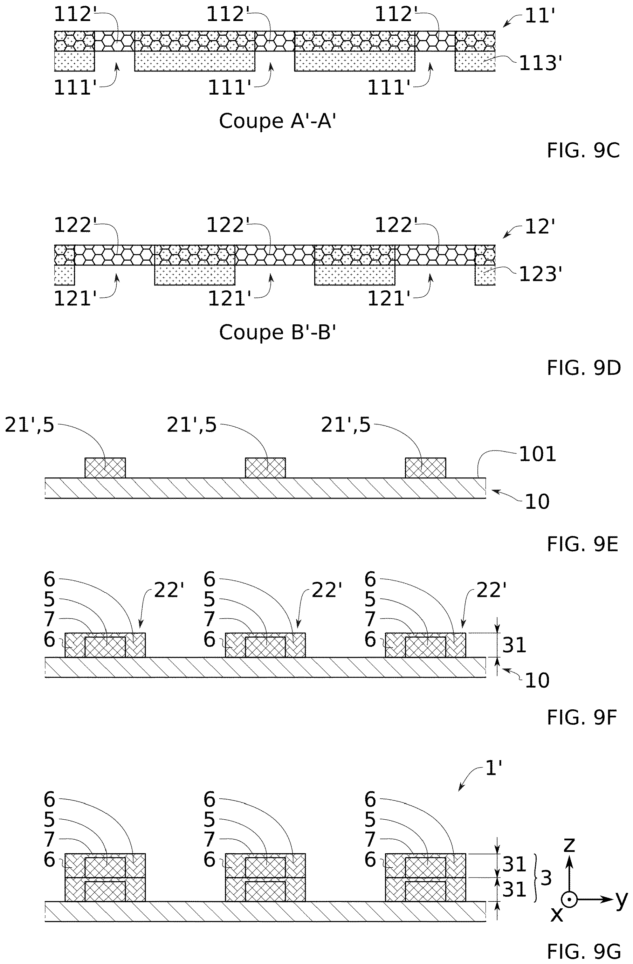

Le second des deux modes de réalisation décrits ci-dessous est plus particulièrement illustré sur les figures 9A à 9G.

La figure 9A représente une vue partielle de dessus d'un premier écran maillé 11' comprenant des ouvertures 111' configurées pour former un premier motif 21' constituant une première partie d'une première couche 31 d'une nervure 3 délimitant un canal d'écoulement 2 et destinée à être supportée par une première face 101 d'un substrat 10.

La figure 9C illustre une vue en coupe partielle du premier écran maillé 11'. La figure 6E illustre le résultat d'une première étape d'impression, sur la première face 101 du substrat 10, d'une première couche 301 à base d'une première encre par sérigraphie à l'aide du premier écran maillé 11' tel que représenté sur la figure 9C.

Le premier écran maillé 11' et la première encre sont tels qu'ils permettent d'imprimer des premiers motifs 21' destinés à former des rainures 5 en un matériau de renfort mécanique.

La figure 9B représente une vue partielle de dessus d'un deuxième écran maillé 12' comprenant des ouvertures 121' configurées pour former un deuxième motif 22' constituant une seconde partie de la première couche 31 de la nervure 3. La figure 9D illustre une vue en coupe partielle du deuxième écran maillé 12'. La figure 6F illustre le résultat d'une deuxième étape d'impression, sur la première face 101 du substrat 10, d'une deuxième couche à base d'une deuxième encre par sérigraphie à l'aide du deuxième écran maillé 12' tel que représenté sur la figure 9D.

Le deuxième écran maillé 12' et la deuxième encre sont tels qu'ils permettent d'imprimer des deuxièmes motifs 22' destinés à former, en se conformant avec les rainures 5, une nervure 3, les rainures 5 constituant, pour la nervure 3, une partie centrale et les deuxièmes motifs 22' constituant, pour la nervure 3, au moins des parties latérales 6, voire une partie supérieure 7.

S'il n'était pas souhaité de recouvrir chaque partie centrale 5, ce qui peut être notamment le cas :
- lorsque la première encre est destinée à former le deuxième matériau 312 conducteur d'électricité, et non le premier matériau 311 de renfort mécanique, et
- lorsque le deuxième matériau 312 doit s'étendre depuis la première face 101 du substrat 10 jusqu'à un sommet de chaque nervure 3 pour qu'un chemin de conduction électrique continu soit formé entre ces extrémités,
il est alors possible que la porosité du maillage 122' du deuxième écran maillé 12' soit obstruée par de l'émulsion 123' sur des portions destinées à être situées en vis-à-vis des rainures 5, lors de l'impression des deuxièmes motifs 22'.

On notera que, dans le cas où une partie supérieure 7 est déposée, chaque rainure 5 à base du premier matériau 311 de renfort mécanique se trouve encapsulée, par au moins trois de ses côtés, par le deuxième matériau 312 conducteur d'électricité.

On observera, sur les figures 9F et 9G, que la constitution d'au moins une couche de chaque nervure varie dans un plan (x,y) d'extension principale de la nervure, ce plan (x,y) étant perpendiculaire à un axe z selon lequel est définie l'épaisseur des nervures. Plus particulièrement, considérant que chaque nervure s'étend principalement selon l'axe x de ce plan (x,y) et considérant donc que la largeur de chaque nervure est définie selon l'axe y du plan (x,y), on observera que la constitution de chaque nervure varie au moins le long de cet axe y.

La figure 9G illustre le fait qu'il est possible de répéter, au moins une fois, mais éventuellement plusieurs fois, les étapes d'impression décrites ci-dessus en référence aux figures 9A à 9F, de sorte à augmenter la hauteur des nervures 3. Dans ce cas, notamment, si la résistivité électrique de la première couche 31 est sensiblement inférieure à 20 mΩ.cm², de préférence sensiblement inférieure à 10 mΩ.cm², la résistivité électrique des deux couches 31 formant la nervure 3 sera doublée, soit sensiblement inférieure à 40 mΩ.cm², de préférence sensiblement inférieure à 20 mΩ.cm², respectivement.

Si les figures 9A à 9G n'illustre le procédé de fabrication d'un guide d'écoulement 1 selon le deuxième mode de réalisation qu'en relation avec une zone active ZA du réacteur électrochimique dont le guide d'écoulement 1 est destiné à faire partie, il est à noter que, comme pour le premier mode de réalisation décrit plus haut, une autre zone, dite zone d'homogénéisation ZH, est également envisagée dans le cadre du deuxième mode de réalisation. Au niveau de cette zone ZH, le guide d'écoulement 1 est potentiellement défini par des nervures 3 entièrement constituées à base du premier matériau 311 de renfort mécanique. En outre, il est envisagé que les rainures 5, à tout le moins de la première couche 31, et les nervures 3 situées en zone d'homogénéisation ZH soient imprimées lors d'une même étape d'impression.

Si les deux modes de réalisation décrits ci-dessus le sont de façon distincte l'un de l'autre, tout mode hybride entre ces deux modes de réalisation est envisageable. Il est par exemple possible d'imprimer les plots 4 selon le premier mode et, entre ces plots 4, une rainure 5 constituant la partie centrale d'une portion de nervure 3 complétée ensuite par l'impression des parties latérales 6, voire de la partie supérieure 7, de cette portion. Dans un tel mode hybride, la constitution d'au moins une couche d'au moins une nervure, voire de chaque nervure, peut varier à la fois selon l'axe x et selon l'axe y d'un plan d'extension principale de la nervure, ce plan (x,y) étant perpendiculaire à un axe z selon lequel est définie l'épaisseur de la nervure.

Il est à noter que, si, dans chacun des deux modes de réalisation décrits ci-dessus, les nervures 3 illustrées sont droites et réparties de façon parallèle entre elles, le guide d'écoulement 1 et 1' selon le premier aspect de l'invention n'est limité ni à une telle forme droite, ni à une répartition parallèle entre elles des nervures 3.

Plus particulièrement, on distingue principalement trois modes de circulation des réactifs ou d'un liquide de refroidissement dans les canaux d'écoulement 2 :
- les canaux en serpentin : un ou plusieurs canaux parcourent l'ensemble de la zone active ZA en plusieurs allers-retours ;
- les canaux parallèles : un faisceau de canaux parallèles et traversants parcourt la zone active ZA de part en part ; et
- les canaux interdigités : un faisceau de canaux parallèles et bouchés parcourt la zone active ZA de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

La fabrication d'un guide d'écoulement 1 au moins selon n'importe lequel des trois modes de circulation énoncés ci-dessus est envisageable du fait qu'il met en oeuvre la technique d'impression par sérigraphie. La forme des nervures 3 en zone d'homogénéisation n'est pas davantage limitée.

Ayant décrit ci-dessus chacun des deux modes de réalisation principalement envisagés, des caractéristiques communes à ces deux modes de réalisation sont décrites ci-dessous.

Il est préférable que chacune des première et deuxième encres puisse être qualifiée d'encre à thixotropie très élevée. Plus particulièrement, une telle encre peut être caractérisée par le fait que son impression par sérigraphie puisse effectivement être réalisée en lui appliquant, de la façon illustrée sur la figure 4, une contrainte de cisaillement, l'encre présentant :
- une viscosité sensiblement comprise entre 70 et 500 Pa.s lorsqu'une vitesse de cisaillement sensiblement égale à 0,1 s⁻¹ lui est appliquée, et
- une viscosité sensiblement comprise entre 2,5 et 7 Pa.s lorsqu'une vitesse de cisaillement sensiblement égale à 100 s⁻¹ lui est appliquée.

Notons que chaque couche d'encre 31 peut être imprimée en plusieurs fois, formant alors chacune un multicouche. Ceci peut permettre d'augmenter la densité des dépôts et/ou leur hauteur. Dans ce cas, la phase de séchage est répétée autant de fois que chaque multicouche comprend de couches.

Notons également que les phases de séchage peuvent par exemple être réalisées en étuve à une température sensiblement égale à 80°C pendant un temps sensiblement égal à 10 minutes.

Le premier matériau 311 peut comprendre, voire être constitué de, l'un au moins parmi :
- Une résine thermoplastique ou époxyde, tels que le poly(chlorure de vinyle) (ou PVC) ou le polyamide (ou PA),
- Une résine thermodurcissable, tel que le polyuréthane (ou PU).

En alternative, le premier matériau 311 peut comprendre au moins les mêmes éléments constitutifs du deuxième matériau 312 avec une concentration en liant, tel que le poly(fluorure de vinylidène), au moins trois fois supérieure.

Par ailleurs, le premier matériau 311 peut comprendre en outre des charges conductrices d'électricité, telles que du graphite et/ou du noir de carbone. Le premier matériau 311 peut ainsi contribuer à la conduction électrique que doivent assurer les nervures 3, tout en assurant son rôle de résistance mécanique en compression.

Chaque écran maillé 11, 11', 12, 12' comprend un maillage 112, 112', 122, 122' et une émulsion 113, 113', 123, 123'.

L'émulsion 113, 113', 123, 123' peut présenter une épaisseur sensiblement comprise entre 100 et 200 µm, de préférence sensiblement comprise entre 100 et 150 µm, et encore plus préférentiellement sensiblement égale à 150 µm.

Le maillage 112, 112', 122, 122' peut présenter une épaisseur sensiblement comprise entre 50 et 150 µm, de préférence sensiblement comprise entre 80 et 120 µm, et encore plus préférentiellement sensiblement égale à 100 µm.

Un paramètre important relatif au guide d'écoulement 1 et 1' concerne la largeur des canaux d'écoulement 2. Cette dernière est définie :
- selon le premier mode de réalisation décrit ci-dessus, par la distance entre les ouvertures 111 et 121 des premier et deuxième écrans maillés 11 et 12 qui sont destinées à l'impression de nervures 3 adjacentes entre elles, et
- selon le second mode de réalisation décrit ci-dessus, par la distance entre les ouvertures 121' du deuxième écran maillé 12' qui sont destinées à l'impression de nervures 3 adjacentes entre elles.

En effet, l'émulsion 113, 123 et 123' de chacun de ces écrans maillés 11, 12 et 12' présente un motif qui est le négatif des nervures 3 et qui définit, entre ces dernières, la largeur des canaux d'écoulement 2 du guide 1.

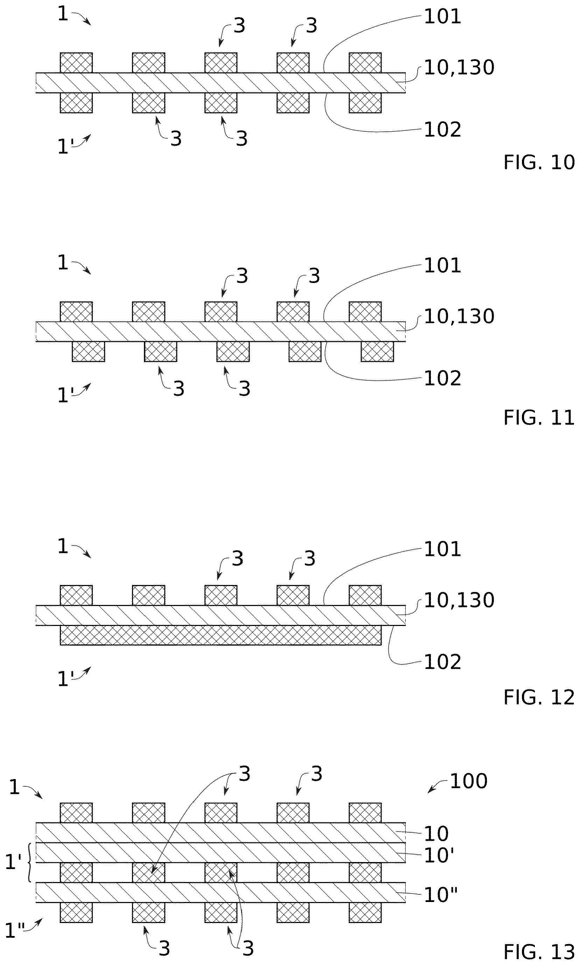

Il est en outre possible de répéter le procédé de fabrication selon l'un ou l'autre des deux modes de réalisation de l'invention décrits ci-dessus sur une seconde face 102 du substrat 10, de sorte à fabriquer sur cette face 102 un second guide d'écoulement 1', par exemple d'une des façons illustrées sur les figures 10 à 12. Notons ici que ces exemples de réalisation sont plus particulièrement adaptés à un substrat 10 comprenant, ou étant constitué de, une simple plaque électriquement conductrice 130, par opposition à une couche d'électrode 110 et une couche de diffusion gazeuse 120 pour réacteur électrochimique.

Une telle plaque électriquement conductrice 130 peut par exemple être constituée à base d'un métal par exemple choisi parmi l'acier inoxydable, l'aluminium, ou le titane. Le métal peut par exemple être protégé par un dépôt carboné ou métallisé ou un polymère composite conducteur d'électrons incluant une couche de métallisation, pour protéger la plaque 130 contre la corrosion ou pour diminuer les résistances de contact. La plaque 130 peut être plus ou moins rigide. Elle a de préférence une épaisseur comprise entre 0,01 et 1 mm, plus favorablement comprise entre 0,02 et 0,1mm.

Dans l'exemple illustré par la figure 10, un premier guide d'écoulement 1 a été fabriqué sur une face supérieure 101 de la plaque électriquement conductrice 130 et un seconde guide d'écoulement 1' a été fabriqué sur une face inférieure 102 de la plaque 130. Des canaux d'écoulement sont ainsi ménagés de part et d'autre de la plaque 130 entre les nervures 3. Dans cet exemple, les nervures 3 des deux faces opposées s'étendent de façon parallèle, présentent de mêmes dimensions et sont situées en vis-à-vis : les nervures 3 des deux faces sont le symétrique les unes des autres par rapport à la plaque 130.

Dans l'exemple illustré par la figure 11, les nervures 3 des deux faces opposées s'étendent de façon parallèle et présentent de mêmes dimensions, mais sont décalées selon une direction transversale à leur direction principale d'extension.

Dans l'exemple de la figure 12, les nervures 3 des deux faces opposées s'étendent selon des directions perpendiculaires.

Ces exemples ont vocation à montrer que toute variation entre premier guide d'écoulement 1 fabriqué sur la première face 101 du substrat 10 et second guide d'écoulement 1' fabriqué sur la deuxième face 102 du substrat 10 est envisageable, la fabrication d'un des guides d'écoulement 1 et 1' selon l'un quelconque des modes de réalisation décrits ci-dessus ne contraignant pas la fabrication de l'autre des guides d'écoulement 1 et 1' selon l'un quelconque des modes de réalisation décrits ci-dessus. Par exemple, chacun des premier et second guides d'écoulement 1 et 1' fabriqués de part et d'autre d'une même plaque 130 peut être d'un mode quelconque parmi les trois modes de circulation décrits plus haut.

La mise en oeuvre de chacun des deux modes de réalisation décrits ci-dessus permet la fabrication d'un circuit fluidique ayant :
- Une largeur de dent 3 de 400 µm,
- Une largeur de canal 2 de 400 µm,
- Une hauteur de dent 3 de 200 µm.

À cette fin :
- les écrans maillés 11, 11', 12 et 12' peuvent présenter une épaisseur d'émulsion 113, 113', 123, 123' de 150 µm,
- les ouvertures 111 de l'écran maillé 11, les ouvertures 121 de l'écran maillé 12 et les ouvertures 121' de l'écran maillé 12' peuvent présenter une largeur de 400 µm, et
- les ouvertures 121 de l'écran maillé 12 et les ouvertures 121' de l'écran maillé 12' appartenant à des nervures 3 adjacentes entre elles peuvent être distantes l'une de l'autre de 400 µm.

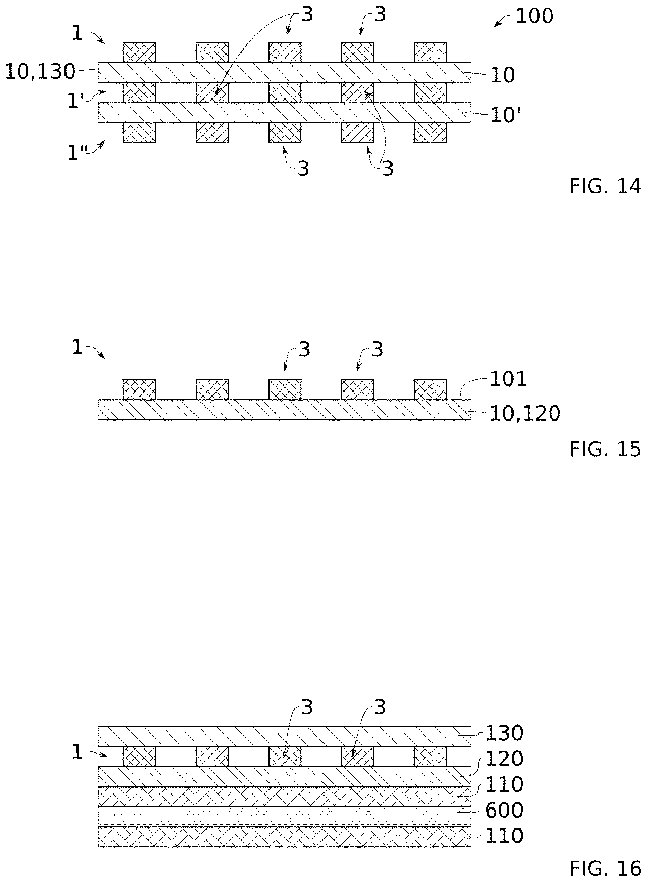

Un autre aspect de l'invention concerne une plaque bipolaire 100, notamment destinée à une application PEM. Cette plaque bipolaire peut être fabriquée par mise en oeuvre de l'un quelconque des deux modes de réalisation décrits ci-dessus, voire par mise en oeuvre des deux modes de réalisation décrits ci-dessus, notamment sur des faces opposées entre elles d'un même substrat 10. En effet, la fabrication d'une plaque bipolaire 100 selon l'invention peut comprendre tout d'abord la mise en oeuvre d'un quelconque des deux modes de réalisation décrits plus haut pour obtenir un premier guide d'écoulement 1 sur une première face 101 d'un substrat 10, puis la mise en oeuvre d'un quelconque des deux modes de réalisation décrits ci-dessus pour obtenir un deuxième guide d'écoulement 1' sur la seconde face 102 du substrat 10 et/ou sur une première face d'un autre substrat. Le cas échéant, il peut consister ensuite à assembler entre eux la pluralité de guides d'écoulement 1 et 1' ainsi fabriqués. Deux exemples de telles plaques bipolaires 100 sont illustrés sur chacune des figures 13 et 14.

La figure 13 illustre une plaque bipolaire 3, formée par la superposition de guides d'écoulement 1, 1' et 1 " obtenus par mise en oeuvre de l'un quelconque des deux modes de réalisation décrits ci-dessus. Dans cet exemple, trois guides d'écoulement 1, 1' et 1 " sont fabriqués à partir de trois substrats 10, 10' et 10". Ces trois guides d'écoulement comportent des nervures 3 sur une unique face. Le guide 1 supérieur présente des nervures 3 en saillie depuis la face supérieure du substrat 10. Le guide intermédiaire 1' et le guide inférieur 1" présentent des nervures 3 en saillie depuis les faces inférieures des substrats 10' et 10" respectivement. Lorsque ces trois guides 1, 1', et 1" sont superposées, des canaux d'écoulement d'un réactif sont ménagés entre les nervures 3 du guide supérieur 1, des canaux d'écoulement d'un liquide caloporteur sont ménagés entre les nervures 3 du guide intermédiaire 1', et des canaux d'écoulement d'un autre réactif sont ménagés entre les nervures 3 du guide inférieur 1".

La figure 14 illustre une plaque bipolaire 100, formée par la superposition de guides d'écoulement 1, 1' et 1" obtenus par mise en oeuvre de l'un quelconque des deux modes de réalisation décrits ci-dessus. Dans cet exemple, trois guides d'écoulement 1, 1' et 1" sont superposés. Le guide supérieur 1 et le guide intermédiaire 1' partage un même substrat 10 et forment une configuration telle qu'illustrée sur la figure 10 dans laquelle le substrat 10 est une simple plaque électriquement conductrice 130. Cette plaque 130 comporte donc des nervures 3 en saillie depuis ses deux faces. Le guide inférieur 1" présente des nervures 3 en saillie depuis la face inférieure du substrat 10'. Comme sur la figure 13, lorsque les trois guides 1, 1' et 1 " sont superposées, des canaux d'écoulement d'un réactif sont ménagés entre les nervures 3 du guide supérieur 1, des canaux d'écoulement d'un liquide caloporteur sont ménagés entre les nervures 3 du guide intermédiaire 1', et des canaux d'écoulement d'un autre réactif sont ménagés entre les nervures 3 du guide inférieur 1".

La figure 15 est une vue en coupe schématique d'un guide d'écoulement 1 selon un autre mode de réalisation de l'invention. Le substrat 10 sur lequel les nervures 3 ont été fabriquées est ici une couche de diffusion gazeuse 120. Les encres à base desquels les nervures 3 ont été fabriquées peuvent être imprimées sur une face 101 de la couche de diffusion gazeuse 120, avec des paramètres d'impression similaires à ceux décrits plus haut. L'on obtient, sur la couche de diffusion gazeuse 120, un guide d'écoulement 1 par mise en oeuvre d'un quelconque des deux modes de réalisation décrits ci-dessus.

La figure 16 est une vue en coupe schématique d'un guide d'écoulement 1 obtenu par mise en oeuvre d'un quelconque des deux modes de réalisation décrits ci-dessus, associé à d'autres composants d'un réacteur électrochimique. Une plaque électriquement conductrice 130, telle que celle détaillée en référence aux figures 10 à 12, peut être plaquée contre le sommet des nervures 3 d'un guide d'écoulement 1. Un assemblage membrane-électrodes, incluant une membrane 600 et deux électrodes 110, est plaqué contre une face inférieure d'une couche de diffusion gazeuse 120 supportant les nervures 3 du guide d'écoulement.

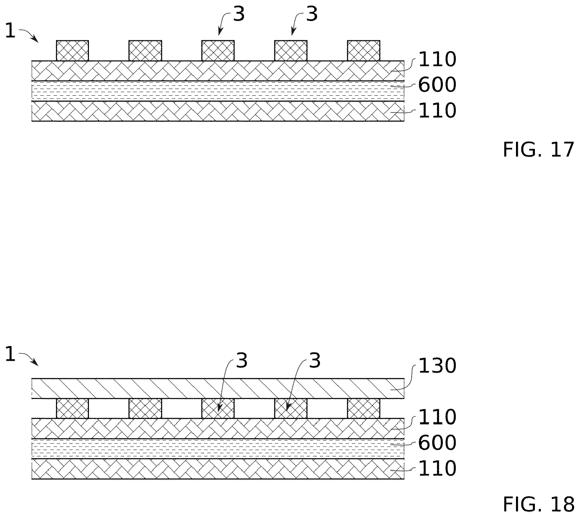

La figure 17 est une vue en coupe schématique d'un guide d'écoulement 1 obtenu par mise en oeuvre d'un quelconque des deux modes de réalisation décrits ci-dessus, associé à d'autres composants d'un réacteur électrochimique. Le substrat 10 sur lequel les couches d'encre 31 ont été imprimées par sérigraphie est ici une électrode 110 solidarisée, préalablement ou postérieurement à l'impression, à une membrane échangeuse de protons 600 d'un assemblage membrane-électrodes. L'encre peut être imprimée sur une face de l'électrode 110, avec des paramètres d'impression similaires à ceux décrits plus haut.

La figure 18 est une vue en coupe schématique de l'assemblage illustré sur la figure 17, associé à un autre composant d'un réacteur électrochimique, à savoir une plaque électriquement conductrice 130. Cette dernière, qui peut être telle décrite en référence aux figures 10 à 12, peut être plaquée contre le sommet des nervures s'étendant depuis la surface d'une des électrodes 110.

L'invention n'est pas limitée aux modes de réalisation précédemment décrits.

La présente invention peut être appliquée à tout type de réacteurs électrochimiques nécessitant au moins un circuit fluidique, notamment pour l'amenée des réactifs et l'évacuation des produits de la réaction et/ou la circulation d'un fluide de refroidissement. Parmi ces réacteurs électrochimiques, l'on compte non seulement des piles à combustible, comme déjà mentionné plus haut, mais également, à titre d'exemple additionnel, des électrolyseurs.

Notons enfin que la présente invention permet la fabrication de circuit fluidique présentant des canaux d'écoulement fins, c'est-à-dire de largeur inférieure à 400 µm, qui ne sont pas réalisables en séries par emboutissage.

## Revendications

1. Guide d'écoulement (1, 1') pour réacteur électrochimique comprenant au moins un canal d'écoulement (2) délimité par au moins une nervure (3) supportée par une première face (101) d'un substrat (10), **caractérisé en ce que** ladite au moins une nervure (3) comprend au moins une couche (31) à base de deux matériaux différents entre eux :
• un premier matériau (311) de renfort mécanique, et
• un deuxième matériau (312) conducteur d'électricité,
les premier et deuxième matériaux (311, 312) se conformant l'un avec l'autre pour former ladite au moins une couche,
• le premier matériau présentant, sous une contrainte moyenne en compression de 1 MPa, une déformation au moins deux fois, de préférence au moins dix fois, inférieure, à la déformation du deuxième matériau sous une même contrainte.

2. Guide d'écoulement (1, 1') pour réacteur électrochimique selon la revendication précédente, la constitution d'au moins une couche d'au moins une nervure (3) du guide d'écoulement (1, 1') varie entre le premier matériau (311) de renfort mécanique et le deuxième matériau (312) conducteur d'électricité selon au moins un axe d'un plan (x,y) d'extension principale de la nervure, ce plan (x,y) étant perpendiculaire à un axe z selon lequel est définie une épaisseur de la nervure.

3. Guide d'écoulement (1, 1') pour réacteur électrochimique selon l'une quelconque des revendications précédentes, dans lequel le deuxième matériau présente une résistivité électrique au moins deux fois, de préférence au moins dix fois, inférieure à une résistivité électrique du premier matériau

4. Guide d'écoulement (1, 1') pour réacteur électrochimique selon l'une quelconque des revendications précédentes, dans lequel le premier matériau (311) présente, sous une contrainte moyenne en compression de 1 MPa, une déformation plastique sensiblement inférieure à 10%.

5. Guide d'écoulement (1, 1') pour réacteur électrochimique selon l'une quelconque des revendications précédentes, dans lequel le deuxième matériau (312) s'étend depuis la première face (101) du substrat (10) jusqu'à un sommet de ladite au moins une nervure (3) en formant un chemin de conduction électrique continu (4).

6. Guide d'écoulement (1, 1') pour réacteur électrochimique selon l'une quelconque des revendications précédentes, dans lequel le premier matériau (311) comprend, voire est constitué de, l'un au moins parmi :
• Une résine thermoplastique ou époxyde, tels que le poly(chlorure de vinyle) ou le polyamide,
• Une résine thermodurcissable, tel que le polyuréthane.

7. Guide d'écoulement (1, 1') pour réacteur électrochimique selon l'une quelconque des revendications 1 à 5, dans lequel le premier matériau (311) comprend au moins les mêmes éléments constitutifs du deuxième matériau (312) avec une concentration en liant au moins trois fois supérieure.

8. Guide d'écoulement (1, 1') pour réacteur électrochimique selon l'une quelconque des revendications précédentes, dans lequel ladite au moins une couche (31) de ladite au moins une nervure (3) comprend des plots (4) du premier matériau (311), le deuxième matériau (312) s'étendant au moins entre plots successifs, par portions, le long de la nervure (3).

9. Guide d'écoulement (1, 1') pour réacteur électrochimique selon la revendication précédente, dans lequel les plots (4) sont répartis, sur la première face (101) du substrat (10), de sorte que chaque plot (4) d'une nervure (3) ne se situe pas à une même position longitudinale qu'un plot (4) d'une nervure (3) adjacente.

10. Guide d'écoulement (1, 1') pour réacteur électrochimique selon l'une quelconque des revendications précédentes, dans lequel les premier et deuxième matériaux (311 et 312) se conforment l'un avec l'autre pour former ladite au moins une couche (31) en s'étendant l'un à côté de l'autre, sur au moins une portion de la longueur de ladite au moins une nervure (3).

11. Guide d'écoulement (1, 1') pour réacteur électrochimique selon la revendication précédente, dans lequel ladite au moins une couche (31) comprend, sur ladite au moins une portion de la longueur de ladite au moins une nervure (3), une partie centrale (5) à base de l'un parmi le premier matériau (311) et le deuxième matériau (312) et des parties latérales (6) à base de l'autre parmi le premier matériau (311) et le deuxième matériau (312).

12. Guide d'écoulement (1, 1') pour réacteur électrochimique selon la revendication précédente, dans lequel ladite au moins une couche (31) comprend en outre une partie supérieure (7) à base du deuxième matériau (312) et s'étendant sur ladite partie centrale (5) et les parties latérales (6), la partie centrale (5) étant de préférence à base du premier matériau.

13. Guide d'écoulement (1, 1') pour réacteur électrochimique selon l'une quelconque des revendications précédentes, dans lequel ladite au moins une couche (31), de préférence ladite au moins une nervure (3), est à base du premier matériau (311) sur une portion de la surface de la première face (101) du substrat (10) qui correspond à une zone d'homogénéisation (ZH) pour le réacteur électrochimique.

14. Plaque bipolaire (100) pour réacteur électrochimique, de préférence pour pile à combustible à membrane échangeuse de protons, comprenant :
• au moins deux guides d'écoulement (1, 1') dont au moins un guide d'écoulement selon l'une quelconque des revendications 1 à 17, et
• au moins un substrat (10) supportant au moins l'un desdits au moins deux guides d'écoulement (1, 1').

15. Procédé de fabrication d'au moins un guide d'écoulement (1, 1') pour réacteur électrochimique, le guide d'écoulement (1, 1') étant délimité par au moins une nervure (3), le procédé comprenant les étapes suivantes :
a. Fournir un substrat (10),
b. Fournir un premier écran maillé (11, 11') comprenant des ouvertures (111, 111') configurées pour former un premier motif (21, 21') constituant une première partie d'une couche (31) de ladite au moins une nervure (3),
c. Fournir un deuxième écran maillé (12, 12') comprenant des ouvertures (121, 121') configurées pour former un deuxième motif (22, 22') constituant une deuxième partie de la couche (31) de ladite au moins une nervure (3) ; puis
Sur une première face (101) du substrat (10) :
d. Imprimer une première couche (301) à base d'une première encre par sérigraphie à l'aide du premier écran maillé (11, 11'),
e. Former le premier motif (21, 21') par séchage de la première couche (301) de la première encre, puis
f. Positionner le deuxième écran maillé (12, 12') de sorte que ses ouvertures (121, 121') se conforment avec le premier motif (21, 21') pour définir sensiblement un volume de ladite au moins une couche (31) de ladite au moins une nervure (3),
g. Imprimer une deuxième couche (302) à base d'une deuxième encre par sérigraphie à l'aide du deuxième écran maillé (12, 12') tel que précédemment positionné,
h. Former le deuxième motif (22, 22') par séchage de la deuxième couche (302) de la deuxième encre,
l'une des première et deuxième encres étant telle que, après séchage, elle forme un premier matériau (311) de renfort mécanique présentant, sous une contrainte moyenne en compression de 1 MPa, une déformation au moins deux fois, de préférence au moins dix fois, inférieure, à la déformation du deuxième matériau sous une même contrainte, et
